# EUROPEAN PATENT SPECIFICATION

(11) **EP 2 035 128 B1**
(45) Date of publication and mention of the grant of the patent: **01.09.2010**
(21) Application number: 07764443.3
(22) Date of filing: 26.06.2007
(51) Int. Cl.: B01F 5/00, B01F 1/00

(54) **AN APPARATUS FOR DISSOLVING SOLID PARTICLES AND LIQUID SUBSTANCES IN A LIQUID**
VORRICHTUNG ZUM LÖSEN VON FESTEN TEILCHEN UND FLÜSSIGEN SUBSTANZEN IN EINER FLÜSSIGKEIT
APPAREIL POUR DISSOUDRE DES PARTICULES SOLIDES ET DES SUBSTANCES LIQUIDES DANS UN LIQUIDE

(30) Priority: 03.07.2006 DK 200600906
(43) Date of publication of application: 18.03.2009
(73) Proprietor: HARDI INTERNATIONAL A/S, 2630 Taastrup (DK)
(72) Inventor: KROGH, Søren, Friis, DK-2680 Solrød Strand (DK)
(74) Representative: Sundien, Thomas
(86) International application number: PCT/DK2007/000310
(87) International publication number: WO 2008/003315

(56) References cited:
- CH-A5- 590 076
- DE-A1- 10 139 413
- DE-U1- 29 813 996
- US-A- 2 699 379
- US-A1- 2002 186 614
- US-A1- 2005 077 636

## Description

The invention relates to an apparatus for mixing and/or dissolving solid particles and/or liquid substances in a liquid, said apparatus being connected to a field sprayer or the like and comprising a container part with supply of water and discharge piping for the mixture or the solution where an outlet opening for the supply of water is arranged along or essentially along a central axis of the container part and that, underneath and/or around the outlet opening of the supply of water, an elevation is arranged or provided whose height decreases by a distance to the central axis of the container part.

### Prior art

It is known to provide a unit for admixing powder, granulate and/or liquid with another liquid eg in connection with the admixture of concentrated toxins or fertilizers to a desired concentration to enable the ready-mixed liquid to be sprayed onto a given area.

Here a particular container is used which is usually smaller than the actual storage container or tank from where the spraying takes place.

The particular container, a so-called preparation charger, for admixture of chemicals and the like has an internal compartment to which chemicals and the like are charged, a lid for closure of the container on the one hand during transportation and, on the other, during the mixing process. In the preparation charger a nozzle is arranged for admixture of a preparation with water. The nozzle is arranged at the side of preparation charger to provide a flow of water in tangential direction and thereby provokes a kind of vortex which is to entrain the preparation within the preparation charger for admixture with the water supplied through the nozzle.

In particular when powder or granular material is added, situations occur when the preparation, when it becomes moist, adheres to the sides and bottom of the preparation charger. This is very inconvenient since it is important that no residue of a specific preparation remains, such residue being in risk of becoming admixed with other preparations with an ensuing risk of hazardous consequences, eg to the crop.

It is also known in the context of a preparation charger to provide a cleaning nozzle that faces upwards. Thereby it is possible to clean chemical containers and to clean the lid of the preparation charger during admixture or following finished admixture.

Such apparatuses for dissolving a particulate solid matter in a liquid are known eg from EP patent No. 0 710 148 B1, wherein a circular flow is created along the side of the container by means of an elbow-shaped pipe arranged immediately at the side of the admixture container. From US patent No. 2,997,373 a similar apparatus is known wherein a number of guide plates are also provided which are arranged substantially tangentially along the inner side of the container.

US 2005/077636 A1 discloses an apparatus suitable for admixture and/or dissolution of solid particles and/or liquid substances in a liquid, comprising a container part, supply of water and discharge piping for the admixture or the solution, whereby an outlet opening suitable for the supply of water is arranged along or essentially along a central axis of the container part and that, underneath and/or around the opening, an elevation is arranged or provided whose height decreases by a distance to the central axis of the container part for forming a flow of liquid that extends up along the sides of the container part.

DE 298 13 996 U1 describe an apparatus for mixing of materials, the apparatus comprising a rotational symmetric mixing chamber having a partly cone shaped protrusion placed below an outlet, the outlet being for discharging mixed material from the mixing chamber.

US 2,699,379 A disclose an apparatus for separation of materials of differential solubility in a solvent or extraction medium. A baffle member, preferably of conical shape, is provided at the closed lower end of outer conduit facing the lower opening of the conduit.

The baffle member has an elevation whose height decreases by a distance to the central axis of the conduit.

US 6,715,515 B2 teaches a preparation charger where the supply of water is accomplished in that the water runs from an angled connector directly from the connector and vertically down into a drain that is located freely underneath the inlet connector for the water when a preparation is not charged to the preparation charger. When powder or granulate is charged to the preparation charger, the preparation is entrained with the incoming water and flushed directly into the drain. This will result in some kind of lump or bridge formation of powder or granulate along the sides of the preparation charger when the powder or granulate becomes moist. Therefore it does not yield the desired discharge of the contents of the preparation charger into a main receptacle.

It is a further drawback of the prior art that the piping to the nozzle(s) that is/are, in the type of preparation charger where a vortex of water is to be formed in the preparation charger, located along the inner side of the preparation charger, whereby the piping may contribute to inhibiting the formation of the vortex and hence contribute to inhibiting satisfactory mixing and cleaning of the mixing container or preparation charger.

In the same manner this type of guide plates will add to the difficulties in cleaning the preparation charger.

It is therefore desirable to ensure good mixture of preparations and an efficient flushing of the preparation charger so as to ensure that the preparation charged to the preparation charger is fully admixed with water and that the preparation charger is as clean as can be after having been flushed thoroughly with water.

Here, in particular field sprayers may be concerned for the combating of vermin in the shape of insects and the like, weed, mould/fungus attacks and distribution of fertilizer to field or crop.

### The novel aspect

This is solved by an apparatus in accordance with the invention wherein the elevation is provided with a number of guide blades for forming a flow of liquid that extends upwards along the sides of the container part.

Hereby it is accomplished that the liquid conveyed to the preparation charger is forced to move upwards along the side of the container part.

The elevation may be provided with guide blades which causes the water to be guided along guide blades or partition walls to provide a movement up along the sides of the container part.

In an embodiment convenient ways are provided in which to arrange the guide blades for providing a rotating flow of liquid in the container.

In another embodiment the guide blades are positioned on an elevation, said elevation being constituted by a cone.

In yet an embodiment the elevation is formed by the lower end of the container part or by the bottom of the container part.

In further an embodiment guide blades may be arranged that are formed in or extend from the lower end of the container part.

In an embodiment it is accomplished that the supply of water may take place from the underside of the container.

In an embodiment water may be supplied; and the dissolved and/or mixed contents of the preparation charger can be discharged through the bottom of the container part. This also means that it is necessary to make only one hole in addition to the charging opening of the container part.

In further embodiments the dissolved and/or mixed contents of the preparation charger can be discharged through the bottom of the container part.

In a compact embodiment of supply and discharge of water and water with admixed chemical, respectively, it is possible to also arrange a flushing nozzle for flushing clean the preparation charger in a conus or cone arranged at the bottom of the container part.

In yet an embodiment the preparation can be flushed clean following admixture of a chemical and a storage can may be flushed clean when the contents of the can are poured into the preparation charger. By means of the pointed tip or edge of the flushing nozzle, the sealing of the can may be ruptured by turning the chemical can upside down and pressing the sealing down over the flushing nozzle. Thereby the contents of the chemical can runs down into the preparation charger and, upon activation of the flushing nozzle, the chemical can is flushed clean and the entire content is utilised. This also ensures that, following emptying, the can contains minimal amounts of chemical.

In the following, reference is made to the drawing, wherein
Figure 1 shows a preparation charger with closed lid;
Figure 2 shows a preparation charger seen in an inclined view from above, where the lid is removed;
Figure 3 shows water supply with an embodiment of a turbine conus for the preparation charger;
Figure 4 shows a preparation charger without lid and with guide blades configured in the lower part of the preparation charger, seen from the side;
Figure 5 shows the preparation charger shown in Figure 4 in sectional view;
Figure 6 shows the preparation charger shown in Figure 4 seen in an inclined view from above; and
Figure 7 shows a further embodiment of the preparation charger with water supply from below and with the preparation charger seen in a partially sectional view; and
Figure 8 shows an embodiment of a conus for use in the preparation charger as shown in Figure 7.

Now convenient embodiments of the invention will be described with reference to the drawing.

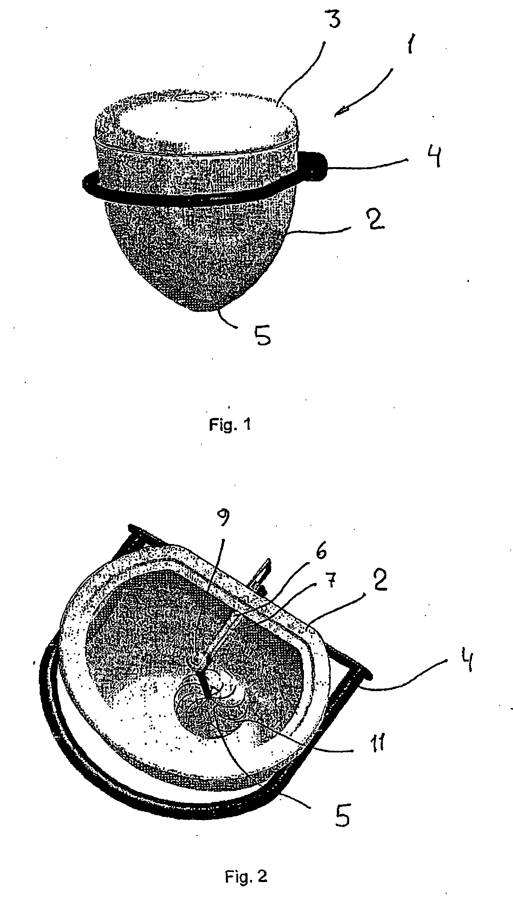

A unit 1 as shown in Figure 1 for admixture of powder, granulate and/or liquid with another liquid, eg in the context of admixture of concentrated toxins or fertilizers to a desired concentration whereby the ready-mixed liquid can be sprayed onto a given area, a so-called preparation charger 1, comprises a container part 2 and a lid 3. The preparation charger 1 may be arranged in connection with the apparatus in which the mixed product is to be used. The arrangement may occur eg by means of a particular fitting or brace 4 that secures the preparation charger 1 relative to a frame or stand of the spraying apparatus. The spraying apparatus may be a field sprayer or the like.

The preparation charger 1 is thus used to transport various types of chemicals into the main tank of the sprayer (not shown).

In the container 2 as such a piping system consisting to two supply pipes 6, 7 is mounted. In a preferred embodiment of the invention, the pipes 6, 7 are connected with a connector piece 8 that keeps the pipes 6, 7 at a mutual distance corresponding to the distance of the pipes 6, 7 where they traverse the container part 2. The connector piece 8 constitutes a kind of spacer element and secures a pair of essentially horizontal and essentially parallel supply pipes 6, 7. The connector piece 8 also constitutes a kind of transition piece between the essentially horizontal pipes and two essentially vertical pipes 10, 10a that are arranged to each their side of the connector piece 8 to the effect that they extend in the vertical central axis of the preparation charger 1. At the bottom of the container part 2 and preferably in the central area, a discharge pipe 5 is arranged.

Thus, the supply pipes 6, 7 extend through the connector piece 8 and into pipes 10, 10a that have their respective outlets arranged in the opposite ends of the pipes 10, 10a. The pipe 10a arranged uppermost is preferably quite short and may optionally be entirely obviated, a spraying nozzle 9 being, instead of being arranged at the end of the pipe 10a, arranged directly on the connector piece 8 by screwing or like known attachment methods.

According to a particular embodiment, the supply pipes 6, 7 may be concentric and, in a simple embodiment (not shown), the supply pipes 6, 7 may be constituted by a single pipe that supplies both flushing nozzle 9 and a water supply 101 with water. However, this embodiment presupposes one or more magnetic valves or the like arranged at flushing nozzle 9 and water supply 101 in order to be able to activate and deactivate the desired functionality which may be any combination of flushing and/or water supply.

The one pipe 6 supplies water to the flushing nozzle 9 arranged in the upper part of the container 2. The function of the flushing nozzle 9 is to flush empty packaging in the form of a can or other container. When the lid 3 is closed, the flushing nozzle is used to clean the uppermost part of the container 2 and the lid 3. Preferably the flushing nozzle 9 is provided with a pointed or sharp configuration to the effect that it enables use of the flushing nozzle 9 to rupture a sealing on a can of chemical by turning the chemical can upside down and pressing the sealing down over the flushing nozzle 9. Thereby the contents of the chemical can are dispensed into the preparation charger 1 and, upon activation of the flushing nozzle 9, the chemical can 1 is flushed clean and the entire content is utilised.

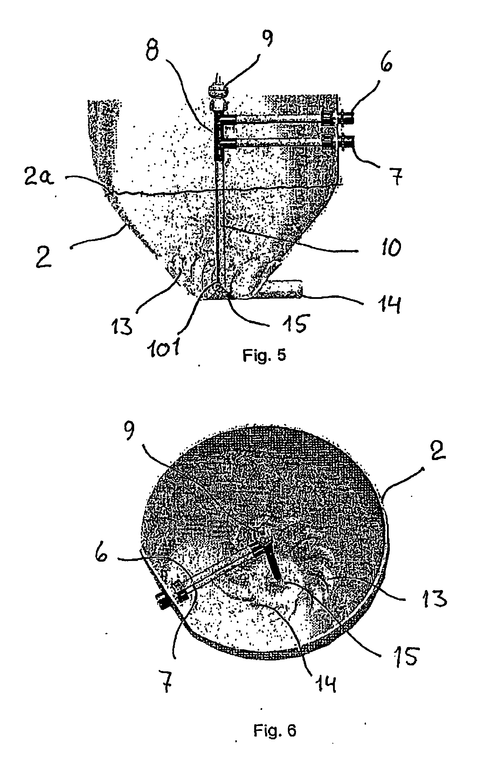

According to a further embodiment, the bottom of the container part 2 is provided with a kind of turbine conus 11, 15, 16. The turbine conus 11, 15, 16 serves the purpose of conveying a flow of water up along the sides of the container part, which is here accomplished by creating rotation of the liquid within the container and ensuring that powdery chemical poured into the container part 2 to a level 2a (see Figure 5) well above the conus 11, 15, 16 is gradually admixed with the supply water and dissolved therein. This takes place by the chemical gradually being admixed with the inlet water from below, said water supply 101 debouching at a modest height above the conus. Also, the conus 11, 16 ensures that flushing does not take place directly in the discharge hole 5, 20 which, in some embodiments, is located underneath the conus 11, 16 which contributes to ensuring that undissolved and large lumps are not flushed directly into the discharge hole 5, 20.

According to another embodiment of the invention, this is ensured in that a discharge pipe 14 is arranged tangentially at the bottom of the container part 2, whereby the flow of water does not travel down into the discharge pipe 14 until after the water has been conveyed upwards along the side of the container part 2 and has been admixed with added chemical.

Preferably the turbine conus 11, 15, 16 is configured with helical guide blades 12, 13, 18 that extend from a central area in proximity of a water inlet 21, 101 and towards the outer rim of the turbine conus 11, 15, 16, the curvature of the guide blades 12, 13, 18 extending such that the water leaves the turbine conus 11, 15, 16 in a direction tangential thereto.

Preferably the turbine conus 11, 15, 16 is configured as a non-movable cone. This means a conus which is not caused to move by the water flux from the inflowing water.

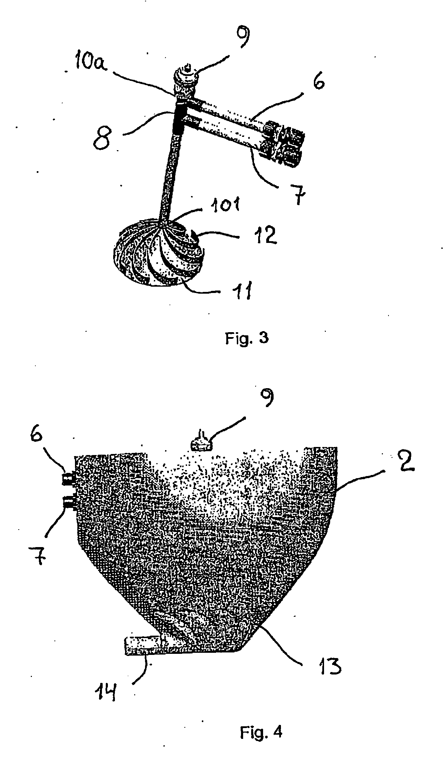

This is accomplished by means of a conus 11 which has been inserted in the lower part of the preparation mixer 1, immediately below the inlet nozzle 101 of the water, as will appear from Figure 2 and Figure 3.

As will appear from Figures 4-6, it can also be accomplished by the guide blades 13 being moulded integrally with or formed in immediate connection with the inner side of the lower end or half of the preparation charger. In that case a discharge pipe 14 from the preparation charger 12 is preferably provided that extends non-axially from the container; an elevation or conus 15 being formed during the water supply that conveys the downwardly oriented flow of water in a direction up along the sides of the preparation charger 1, said sides being provided with guide blades 13. Here the turbine cone is constituted by a conus 15 in the bottom of the container part 2 and of guide blades 13 that are configured in the inner side of the container part. The discharge pipe 14 is preferably arranged for receiving a tangential flow of liquid relative to the bottom of the container part 2.

In this embodiment of the preparation charger 1, the water is conveyed via the piping 6, 10 to the bottom of the container part 2. The pipe 10, the debouching 101 of which is arranged just above a kind of conus 15 configured in the lower part of the container part 2, conveys the water at high speed down across the conus 15 and the flow of water is reversed at the bottom of the container part 2, following which the water runs up along the side of the container part 2. In the lower end of the container part 2, wings or guide blades 13 are provided that generate rotation of the liquid.

The liquid rotates to a given height in the container until equilibrium is reached between the supplied amount of liquid and the amount that leaves the container via the discharge pipe 14.

In this embodiment the discharge pipe 14 is arranged tangentially at the bottom of the container part 2 relative to the central axis of the container part 2.

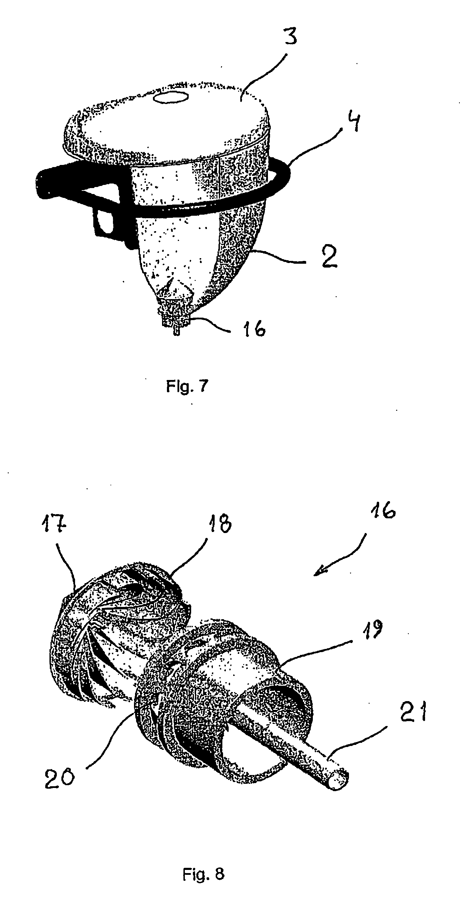

As shown in figures 7 and 8, a further embodiment of a conus 16 for forming a vortex in the preparation charger 1 is a conus 16 with an upper, essentially smooth top surface in the form of a cone 17 and a bottom face configured with guide blades 18. The guide blades 18 may have different configurations, but according to the preferred embodiment of the conus 16, the curvature of the guide blades 18 extends such that the water leaves the turbine conus in a direction tangentially thereto. At the bottom of the container part 2, a passage is arranged which, via a pipe, transmits water into the container. When the water leaves the pipe, the water is pressed towards the top of the conus, following which the water is forced out through the blades. The blades route the liquid tangentially into the container which causes the liquid to rotate. Owing to the rotation, the liquid rises along the side of the container.

Figures 7 and 8 do not show that here, too, a flushing nozzle 9 may be arranged in the upper part of the container part 2.

When the rotation of the liquid cannot become more potent, the redundant water is drawn out through holes 20 in a branch piece 19. The water travels down past the pipe 21 and is drawn up into the tank (not shown).

An illustrative example of use of the preparation charger 1 may be that the user has to charge the main tank of the sprayer with 250 kg of manganese sulphate. Usually manganese sulphate is supplied in powder form and in bags containing 25 kg of powder.

When the preparation charger 1 is in an in-use situation, the water supply through the pipe 6, 10 and down into the conical turbine 11, 15, 16 is opened. A suction or vacuum for a discharge hole 5, 14, 20 is also activated, which discharge hole 5, 14, 20 is arranged at the bottom of the container part 2 to the effect that the liquid supplied can also be withdrawn again.

The water is caused to travel through the pipe 6, 10 to the conus 11, 15, 16 and guide blades 12, 13, 18 at a specific pressure whereby the water is forced out between the guide blades 12, 13, 18 and is thereby also forced to rotate in the container part 2. Following a short period of time a certain amount of water will be rotating in the container part 2. This means that there is a balance between the amount of water supplied to the container part 1 and the amount withdrawn.

The user charges 25 kg of preparation to the preparation charger 1, thereby causing the rotation along the side of the container part 1 to stop naturally. The water which is, via conus 11, 15, 16 and guide blades 12, 13, 18, supplied to the container part 2 from below thus receives the powder from below and upwards. When most of the powder has been flushed out of the preparation charger 1, the water starts to rotate anew and thereby flushes the side of the preparation charger 1, whereby the remainder of powder is flushed out of the preparation charger 1 and into the main tank. Then the subsequent portions of preparation or chemical are charged to the preparation charger 1 and the process is repeated. When the chemicals have been transported to the main tank, the preparation charger 1 is cleaned, the lid 3 is closed and the flushing nozzle 9 is activated.

The most efficient dissolution/admixture is of course required in case of dissolution/admixture of powdery material or granulates, and therefore the description is aimed at the dissolution/admixture of such types of chemicals. This does not preclude the preparation charger from being used for admixture of liquid chemicals with water. For instance, highly concentrated chemicals may be concerned or merely lightly flowing chemicals that may conveniently be dosed and admixed in the main tank of the sprayer via the preparation charger. The cleaning as such of the preparation charger is hereby also facilitated compared to the prior art; a flushing of sides and bottom of the preparation charger simultaneously taking place during the admixture.

## Claims

1. An apparatus for admixture and/or dissolution of solid particles and/or liquid substances in a liquid, said apparatus being connected to a field sprayer or the like and comprising a container part, supply of water and discharge piping (14, 19) for the admixture or the solution, where an outlet opening (101) for the supply (7, 10) of water is arranged along or essentially along a central axis of the container part (2) and that, underneath and/or around the outlet opening (101) of the supply (7, 10) of water, an elevation (15) is arranged or provided whose height decreases by a distance to the central axis of the container part (2) **characterised in that** the elevation (15) is provided with a number of guide blades (12, 13, 18) for forming a flow of liquid that extends up along the sides of the container part (2).

2. An apparatus according to claim 1, **characterised in that** the guide blades (12, 13, 18) curve such that, when most distant from the central axis of the container part (2), they point in tangential direction relative to the sides of the container part (2) or approximates pointing in tangential direction for forming a rotating flow of liquid.

3. An apparatus according to claim 1 or 2, **characterised in that** the guide blades (12, 13, 18) are provided on the top face of the elevation (15) and that the elevation (15) is constituted by a cone (11).

4. An apparatus according to claim 2, **characterised in that** the elevation (15) is formed in the lower end of the container part (2).

5. An apparatus according to claim 4, **characterised in that** guide blades (12, 13, 18) are provided on the inner side of the lower end of the container part (2).

6. An apparatus according to claim 9, **characterised in that** the guide blades (12, 13, 18) are provided on the underside of a cone (17).

7. An apparatus according to claim 6, **characterised in that** both supply of water (21) and discharge piping (19) are arranged concentrically at the lower end of the container part (2).

8. An apparatus according to claim 6 or 7, **characterised in that** the discharge pipe (19) is, along its circumference, provided with a number of holes (20).

9. An apparatus according to claim 8, **characterised in that** the holes (20) are arranged at the upper end of the discharge pipe (19).

10. An apparatus according to claims 6-9, **characterised in** a flushing nozzle is arranged in the tip of the cone (17).

11. An apparatus according to claim 10, **characterised in that**, in connection with a further water supply (6), a flushing nozzle (9) is arranged at the upper end of the container part (2), said flushing nozzle (9) being provided with an sharp tip or edge.

12. An apparatus according to claims 1, 4 or 5, **characterised in that** the discharge pipe (14) is arranged tangentially at the bottom of the container part (2) relative to the central axis of the container part (2).

## Patentansprüche

1. Vorrichtung für eine Beimischung und/oder Lösung von festen Teilchen und/oder flüssigen Substanzen in einer Flüssigkeit, welche Vorrichtung mit einer Feldspritze oder dergleichen verbunden ist und einen Behälterteil, eine Wasserversorgung und eine Ablaufleitung (14, 19) für die Beimischung oder die Lösung umfasst, wobei eine Auslassöffnung (101) zur Versorgung (7, 10) von Wasser entlang oder im Wesentlichen entlang von einer Mittelachse des Behälterteils (2) angeordnet ist, und wobei, unterhalb der Auslassöffnung (101) und/oder um die Auslassöffnung (101) der Versorgung (7, 10) von Wasser herum eine Erhebung (15) angeordnet oder vorgesehen ist, deren Höhe um eine Strecke zur Mittelachse des Behälterteils (2) hin abnehmend ist, **dadurch gekennzeichnet, dass** die Erhebung (15) mit einer Anzahl von Leitschaufeln (12, 13, 18) zur Bildung einer Strömung von Flüssigkeit versehen ist, welche sich entlang der Seiten des Behälterteils (2) hinauf erstreckt.

2. Vorrichtung nach Anspruch 1, **dadurch gekennzeichnet, dass** die Leitschaufeln (12, 13, 18) derart gekrümmt sind, dass sie, wenn sie von der Mittelachse des Behälterteils (2) am meisten entfernt sind, in tangentialer Richtung relativ zu den Seiten des Behälterteils (2) weisen oder annäherungsweise in tangentialer Richtung weisen, um eine rotierende Strömung von Flüssigkeit zu bilden.

3. Vorrichtung nach Anspruch 1 oder 2, **dadurch gekennzeichnet, dass** die Leitschaufeln (12, 13, 18) an der Oberseite der Erhebung (15) vorgesehen sind, und dass die Erhebung (15) durch einen Konus (11) gebildet ist.

4. Vorrichtung nach Anspruch 2, **dadurch gekennzeichnet, dass** die Erhebung (15) am unteren Ende des Behälterteils (2) ausgebildet ist.

5. Vorrichtung nach Anspruch 4, **dadurch gekennzeichnet, dass** die Leitschaufeln (12, 13, 18) an der Innenseite des unteren Endes des Behälterteils (2) vorgesehen sind.

6. Vorrichtung nach Anspruch 1, **dadurch gekennzeichnet, dass** die Leitschaufeln (12, 13, 18) an der Unterseite eines Konus (17) vorgesehen sind.

7. Vorrichtung nach Anspruch 6, **dadurch gekennzeichnet, dass** sowohl die Wasserversorgung (21) als auch die Ablaufleitung (19) konzentrisch am unteren Ende des Behälterteils (2) angeordnet sind.

8. Vorrichtung nach Anspruch 6 oder 7, **dadurch gekennzeichnet, dass** die Ablaufleitung (19) entlang ihrem Umfang mit einer Anzahl von Lücken (20) versehen ist.

9. Vorrichtung nach Anspruch 8, **dadurch gekennzeichnet, dass** die Lücken (20) am oberen Ende der Ablaufleitung (19) angeordnet sind.

10. Vorrichtung nach den Ansprüchen 6 bis 9, **dadurch gekennzeichnet, dass** an der Spitze des Konus (17) eine Spüldüse angeordnet ist.

11. Vorrichtung nach Anspruch 10, **dadurch gekennzeichnet, dass,** in Verbindung mit einer weiteren Wasserversorgung (6), eine Spüldüse (9) am oberen Ende des Behälterteils (2) angeordnet ist, welche Spüldüse (9) mit einer scharfen Spitze oder Kante versehen ist.

12. Vorrichtung nach den Ansprüchen 1, 4 oder 5, **dadurch gekennzeichnet, dass** die Ablaufleitung (14) tangential unten am Behälterteil (2) relativ zur Mittelachse des Behälterteils (2) angeordnet ist.

## Revendications

1. Appareil pour mélanger et/ou dissoudre des particules solides et/ou des substances liquides, ledit appareil étant lié à un pulvérisateur agricole ou similaire et comprenant un élément conteneur, alimentation en eau et tuyauterie de décharge (14, 19) pour le mélange ou la dissolution, dans lequel un trou de vidange (101) pour l'alimentation (7, 10) en eau est aménagé le long de ou bien essentiellement le long d'un axe central de l'élément conteneur (2); et que, au-dessous de et/ou autour du trou de vidange (101) de l'alimentation en eau, une élévation (15) est aménagée ou pourvue dont la hauteur se diminue par une distance à l'axe central de l'élément conteneur (2), **caractérisé en ce que** l'élévation (15) est pourvue d'un nombre d'aubes directrices (12, 13, 18) pour générer un flux de liquide s'étendant vers le haut selon les cotés de l'élément conteneur (2).

2. Appareil selon la revendication 1, **caractérisé en ce que** les aubes directrices (12, 13, 18) se courbent de manière à ce que, quand le plus distantes de l'axe central de l'élément conteneur (2), elles visent dans la direction tangentielle relative aux cotés de l'élément conteneur (2) ou s'approchent le pointage dans la direction tangentielle pour générer un flux rotatif de liquide.

3. Appareil selon la revendication 1 ou 2, **caractérisé en ce que** les aubes directrices (12, 13, 18) sont pourvues sur la surface vers le haut de l'élévation (15), et **en ce que** l'élévation (15) se constitue d'un cône (11).

4. Appareil selon la revendication 2, **caractérisé en ce que** l'élévation (15) est conçue dans l'extrémité vers le bas de l'élément conteneur (2).

5. Appareil selon la revendication 4, **caractérisé en ce que** des aubes directrices (12, 13, 18) sont pourvues sur la face interne de l'extrémité vers le bas de l'élément conteneur (2).

6. Appareil selon la revendication 1, **caractérisé en ce que** les aubes directrices (12, 13, 18) sont pourvues sur la face en bas d'un cône (17).

7. Appareil selon la revendication 6, **caractérisé en ce que** l'alimentation en eau (21) aussi bien que la tuyauterie de décharge (19) sont aménagés de manière concentrique à l'extrémité vers le bas de l'élément conteneur (2).

8. Appareil selon les revendications 6 ou 7, **caractérisé en ce que** le tuyau de décharge (19) est, le long de son circonférence, pourvu d'un nombre de trous (20).

9. Appareil selon la revendication 8, **caractérisé en ce que** les trous (20) sont aménagés á l'extrémité vers le haut du tuyau de décharge (19).

10. Appareil selon les revendications 6 - 9, **caractérisé en ce que** une buse de chasse d'eau est aménagée dans la pointe du cône (17).

11. Appareil selon la revendication 10, **caractérisé en ce que,** en connexion avec une alimentation en eau supplémentaire (6), une buse de chasse d'eau (9) est aménagée à l'extrémité vers le haut de l'élément conteneur (2), ladite buse de chasse d'eau (9) étant pourvue d'une pointe ou bordure pointue.

12. Appareil selon les revendications 1, 4 ou 5, **caractérisé en ce que** le tuyau de décharge (14) est aménagé tangentiellement au fond de l'élément conteneur (2) relatif á l'axe central de l'élément conteneur (2).
